Europäisches Patentamt

European Patent Office

Office européen des brevets

(11) Publication number: **0 387 569**
**A1**

# EUROPEAN PATENT APPLICATION

(21) Application number: **90103630.1**

(51) Int. Cl.⁵: **E03C 1/02**

(22) Date of filing: **24.02.90**

(30) Priority: **08.03.89 IT 8554489**

(43) Date of publication of application:
**19.09.90 Bulletin 90/38**

(84) Designated Contracting States:
**BE CH DE ES FR LI**

(71) Applicant: **Mastromatteo, Ciro**
**81, Via Brigata Tridentina**
**Camisano (VI)(IT)**

(72) Inventor: **Mastromatteo, Ciro**
**81, Via Brigata Tridentina**
**Camisano (VI)(IT)**

(74) Representative: **Bonini, Ercole**
**c/o STUDIO ING. E. Bonini SAS 8 Corso**
**Fogazzaro**
**I-36100 Vicenza(IT)**

(54) **Seven-way enbloc pipe fitting for the junction of waterworks pipes.**

(57) According to the invention an enbloc pipe-fitting for the pipes of waterworks systems consists of a metal body (2), which presents a plurality of ways for the flow, up to seven at most, of which three ways (10, 20, 30) are arranged along the longitudinal axis (3) of the fitting (1), two of which (10, 30) communicate with each other, while the four remaining ways (50, 60, 70, 80) are arranged orthogonally and at the opposite sides in relation to the longitudinal axis (3) of the fitting (1), they are axially opposed to each other two by two, so as to form two pairs (4; 5), wherein the ways (60, 80; 50, 70) of each pair (4; 5) communicate with each other. The ways (50, 70) of one (5) of said pairs communicate with the ways (10, 30) which communicate with each other and are arranged orthogonally and along the longitudinal axis (3) of the fitting, while the ways (60, 80) of the other pair (4) communicate with the remaining way (20) arranged orthogonally and along the longitudinal axis (3) of the fitting. The ways of the fitting are provided with junction ends (62, 64, 65, 67) suited for the connection of the fitting with the pipes.

FIG.1

Xerox Copy Centre

## SEVEN-WAY ENBLOC PIPE FITTING FOR THE JUNCTION OF WATERWORKS PIPES.

The invention concerns a seven-way enbloc pipe fitting, particularly suited for the laying of waterworks shunted from a main.

It is known that in order to lay, for instance, a heating system, the main shunt from the risers is obtained by intercepting the delivery and the return risers by means of two union tees and a bridging curve. The plumber in charge of laying the system must perform a section in the delivery and the return risers in order to insert the shunt fittings. Said operation is anything but easy, especially if one considers that in most cases it must be performed in very limited spaces and, in any case, under very arduous working conditions.

Moreover, the necessity of having to handle a plurality of fittings further complicates the plumber's work, which in the end also gives poor results from an aesthetical point of view, because of the presence of three junction fittings for each junction and of the corresponding shunt.

If one takes into consideration a heating system in an apartment building, for instance, where a junction with its corresponding shunt must be applied for each apartment unit, it is easy to understand how the difficulty of connecting the fittings and their number can complicate the plumber's job, and become uneconomical.

Similar inconveniences arise when it becomes necessary to connect a wall boiler to the header feeding the delivery and return pipes to and from the radiators or when it is necessary to connect a heater for the supply of hot water with the pipes delivering the utilities. In these cases, too, it will be necessary to use a plurality of fittings of different kinds and to operate under difficult conditions because of the limited spaces available for the assembly operations.

The main purpose of the present invention is to eliminate the above-mentioned inconveniences by disclosing a seven-way enbloc pipe-fitting for waterworks pipes, whose main purpose is to reduce the number of pieces necessary for the junction between the mains and the shunted pipes of the utilities.

Another purpose of the invention is to disclose a seven-way enbloc pipe-fitting which permits a reduction of the time necessary for the assembly and the junction.

Yet another purpose of the invention is to disclose a seven-way enbloc pipe-fitting allowing an easy junction particularly in those difficult situations wherein the space available for the assembly operation is very limited.

Not the least purpose is the disclosure of a universal type seven-way enbloc pipe-fitting which, by adequately varying the junction ends, can indifferently be connected with pipes having a male thread, or a smooth end which needs to be connected by tightening through mechanic compression or to be welded.

The above-mentioned purposes and others, which will be better described hereafter, are fulfilled by an enblock pipe fitting for waterworks pipes which, in accordance with the patent claims, comprises a metal body and is characterized in that it presents seven flow ways, whereof three ways are arranged along the longitudinal direction of the fitting, two of them communicating with each other, while the remaining four ways, are arranged orthogonally at the opposite sides in relation to the longitudinal axis of the fitting and are opposite to each other, two by two, so as to form two pairs, wherein the ways of each pair communicate with each other. Moreover, the ways of one of said pairs communicate with the two ways communicating with each other, which are arranged along the longitudinal direction of the fitting, while the ways of the other pair communicate with the third way arranged along the longitudinal direction of the fitting. On the ways of the fitting there are junction ends which are suited for the junction of the fitting with the pipes of the system.

Advantageously, according to the invention a pipe fitting is disclosed which permits the reduction of the number of pieces necessary to perform the idraulic connection between the mains and the shunted pipes of the utilities.

Another advantage is represented by the fact that through the fitting according to the invention the assembly is made easier, particularly in those operation situations where the space available is very limited. Moreover, the time necessary for the assembly is much reduced.

The fitting according to the invention also presents the advantage of being universal, so that it can be applied on pipes having an end with a male thread, or a smooth end to be tightened through mechanical compression or an end which needs to be welded, whereby it suffices to vary the junction ends which are present on the flow ways.

Through its application it is easier to perform the shunting operations from the main risers in a heating system with radiators, both when the system is on an intermediate floor or on the top floor, where it is necessary to insert the breather pipes at the end of the main delivery and return risers.

Moreover, the fitting according to the invention can advantageously be used for the junction of a boiler to the pipes feeding the radiators, whereby the latter are joined to the fitting according to the invention through the interposition of a header of a known type.

The fitting according to the invention can also be advantageously applied for the connection between a heater for the production of hot water and the pipes for the delivery of the utilities and, at the same time, also with the pipe for the inlet of cold water from the distribution network to the heater.

Finally another advantageous application of the fitting according to the invention is the connection through flexible pipes of the intake plugs for cold and hot water to sink faucets, particularly in those cases where the intake connection from the wall is placed in a difficult-to-reach position.

Further scope of applicability of the present invention will become apparent from the detailed description given hereinafter. However, it should be understood that the detailed description and specific examples, while indicating a preferred embodiment of the invention, are given by way of illustration only, since various changes and modifications within the spirit and scope of the invention will become apparent to those skilled in the art from this detailed description, and from the drawings, wherein:

- Fig. 1 shows the seven-way enbloc pipe fitting according to the invention in an axonometric representation;

- Fig. 2 shows the fitting of Fig. 1 in a plan sectional view;

- Fig. 3 shows a perspective sectional view of the fitting of Fig. 1;

- Fig. 4 shows a front view of the fitting of Fig. 1;

- Fig. 5 shows an example of application of the fitting according to the invention for the shunted junction of the radiators with the main risers of a heating system;

- Fig. 6 shows the same junction as in Fig. 5 applied on the top floor, wherein the risers are provided with breather pipes;

- Fig. 7 shows the application of the fitting according to the invention for the delivery of cold and hot water to the faucets of a sink from the fixed intake plugs on a wall;

- Fig. 8 shows yet another application of the fitting according to the invention for the connection of the pipes feeding the radiators with a boiler for the production of hot water through the interposition of a header;

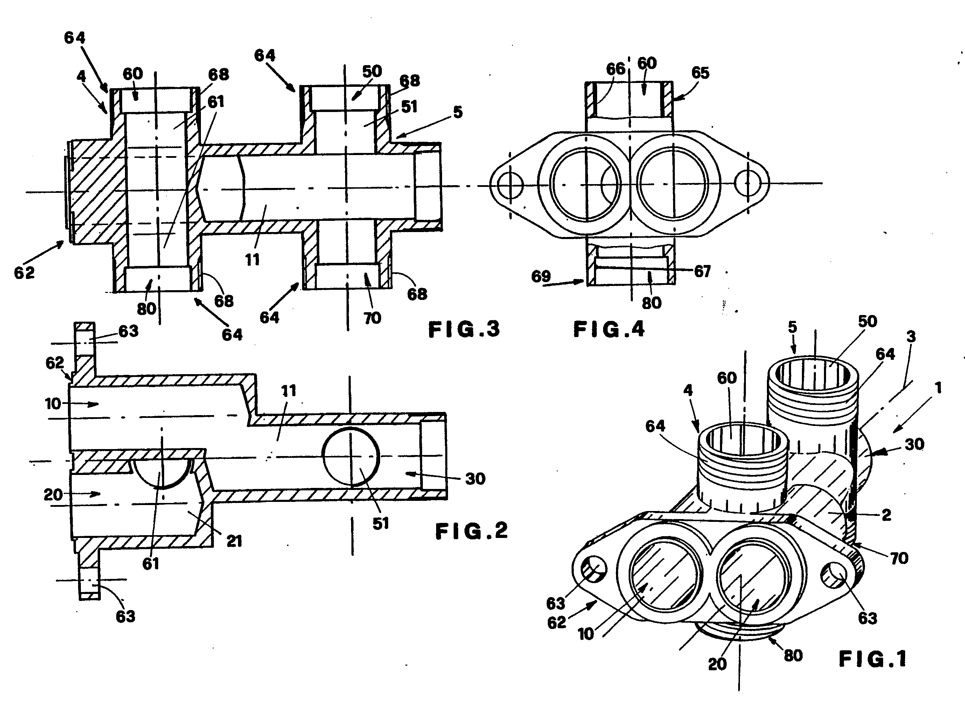

- Fig. 9 shows another application of the fitting according to the invention, through which the waterworks main for the delivery of cold water is connected with the heater for production of hot water and with the pipes for the distribution of the utilities. As can be observed in Fig. 1, the fitting according to the invention, which is indicated as a whole with 1, comprises an enbloc body 2, preferably made of brass and obtained through die-drawing or pressure die-casting, presenting seven ways, three of which are arranged on a horizontal plane passing through the longitudinal axis 3 of the fitting, while the remaining four ways are arranged on a vertical plane which also passes through the longitudinal axis 3. It will be specifically observed that the ways arranged on the horizontal plane and parallel to the longitudinal axis 3 of the fitting are way 10, way 20 and way 30, represented in Fig. 1 and also visible in detail in Fig. 2, wherein it can be observed that the ways 10 and 30 communicate with each other through duct 11. On the contrary, the ways arranged on the vertical plane passing through the longitudinal axis 3 of the fitting are indicated in Fig. 1 with the numbers 50, 60, 70 and 80 and they are also visible in Fig. 3, wherein it will be specifically observed that the ways 60 and 80 communicate with each other through duct 61, while the ways 50 and 70 communicate with each other through duct 51. It can be said, therefore, that the ways which are arranged on the vertical plane passing through the longitudinal axis 3 of the fitting consist of pair 4 comprising the ways 60 and 80 in communication with each other through duct 61 and of pair 5 comprising the ways 50 and 70 which communicate with each other through duct 51.

On the base of what has been said and by observing the Figs. 1, 2 and 3 it can, therefore, be concluded that fitting 1 consists of seven ways, of which the ways 10 and 30 arranged on the horizontal plane and the ways 50 and 70 arranged on the vertical plane communicate with each other through the ducts 11 and 51, while way 20 arranged on the horizontal plane communicates with the ways 60 and 80 arranged on the vertical plane passing through the longitudinal axis 3 of the fitting through duct 61 and duct 21.

Fitting 1 according to the invention is complete with junction ends on its flow ways, which permit to connect it with the pipes of the systems.

By observing Fig. 1 and also the Figs. 2, 3 and 4 it can be seen that the ways 10 and 20 present a flange joint 62 which can be coupled with pipes or headers having a matching flange by means of passing screws which will lodge in the holes 63. On the other hand, the ways 50, 60, 70, 80 and 30 present a joint 64 with a male thread 68 through which fitting 1 is screwed onto the pipes with which it has to be connected.

It is, however, obvious that fitting 1 according to the invention can present joints for its connection with pipes differing in their form. Thus, for instance, in the front view of Fig. 4 only by way of example, way 60 is represented with a connection joint 65 presenting a female thread 66, while the lower way 80 is represented with a joint 69 having a smooth gauged hole 67 which is suited to be connected with a pipe to which it is joined through welding.

It is threfore understood that all the ways forming fitting 1 according to the invention may indifferently have their ends suited for the junction or the connection with pipes, presenting a flange or being smooth and suited to be welded or with a male or female thread following the assembly requirements or, preferably, in accordance with the construction characteristics of the ends of the pipes to be connected with the fitting. Fitting 1 according to the invention lends itself to a number of pipe connections of different types which yield considerable advantages during the assembly operation thanks to the fact that fitting 1 is enbloc.

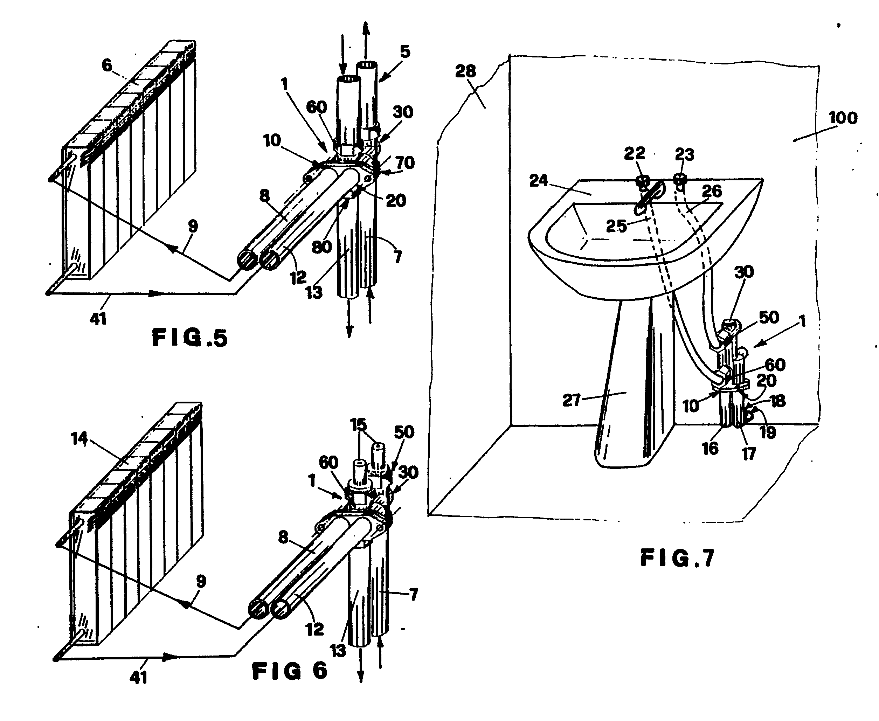

Fig. 5 shows one of the possible applications of the fitting according to the invention, wherein fitting 1 is inserted into a risers 5 and provides the shunt feeding a network of radiators, whereby Fig. 5 only shows radiator 6 by way of example. The delivery riser 7 is connected with way 70 and, therefore, as can be observed in Fig. 3, with duct 51, which in turn communicates with duct 11 feeding way 10 which is connected with duct 8 feeding radiator 6 following the direction of the water flow, which is indicated by arrow 9. The return of the water from radiator 6 occurs following the direction of arrow 41 through pipe 12, which leads the water to way 20 of fitting 1, which, as can be seen in Fig. 2, leads the water to the ways 60 and 80 of the return pipe 13 through duct 21 and duct 61. In this application way 30 is closed by means of a cap.

It is interesting to observe how in this application the enbloc fitting 1 according to the invention is used instead of the common fittings which are usually used for the known connection, i.e. two teejonts and a bridging curve, insuring simplicity of assembly and a better aesthetic result after the assembly has been completed.

Instead of feeding a network of radiators, the above-described connection can also connect a water-distribution network, always using the fitting according to the invention.

Fig. 6 shows the application of the fitting according to the invention in a situation resembling the one represented in Fig. 5, but in this case radiator 14 to be connected is a radiator placed on the top floor of a building, i.e. it is connected in parallel to the delivery pipe 7 and the return pipe 13 in their terminal top position.

The flows through the delivery pipe 8 and the return pipe 12 to and from the radiator are indicated by the arrows 9 and 41 respectively, as they were represented in Fig. 5. In this application, too, way 30 of fitting 1 is closed by a cap, while the breather and safety devices 15 are inserted into the upper ways 50 and 60. In this case, too, the application of fitting 1 according to the invention yields the same advantages as in the application represented in Fig. 5..

Another useful application of fitting 1 according to the invention is illustrated in Fig. 7, wherein it can be seen that fitting 1 is used to connected the wall intakes 18 and 19 supplying water to the faucets 22 and 23 of sink 24. In this example of application pipe 16 joins intake 18 with the fitting way 10, while pipe 17 joins intake 19 with way 20 of the same fitting. As can be observed, way 30 is plugged, as are the rear ways 80 and 70, not represented in this Figure. On the other hand, way 60 is connected to fancet 22 through the flexible hose 25 and way 50 is connected with faucet 23 through the flexible hose 26. The flow situation which is thus created allows the water flowing in from the wall intake 19 to reach fancet 22 by flowing through pipe 17, way 20, duct 21, duct 61, way 60 and the flexible hose 25, as can be understood by observing simultaneously the Figs. 7, 2 and 3. In an analogous manner faucet 23 is fed from the wall intake 18 from which the water flowing in through pipe 16, way 10, duct 11, duct 51, way 50 and the flexible hose 26, reaches faucet 23, as can also be seen by simultaneously observing the Figs. 7, 2 and 3.

The application of the fitting according to the invention in a waterworks system thus situated permits in the first place the use, once more, of an enbloc fitting, such as the fitting 1 of the invention, instead of the two connecting fittings which would be used in a traditional-type junction. The use of the fitting according to the invention yields the further advantage that the water intakes can be transfered on wall 100, thereby avoiding the necessity of operating in the opposite side comprised between the column 27 supporting sink 24 and the lateral wall 28 of the room, where the space is limited.

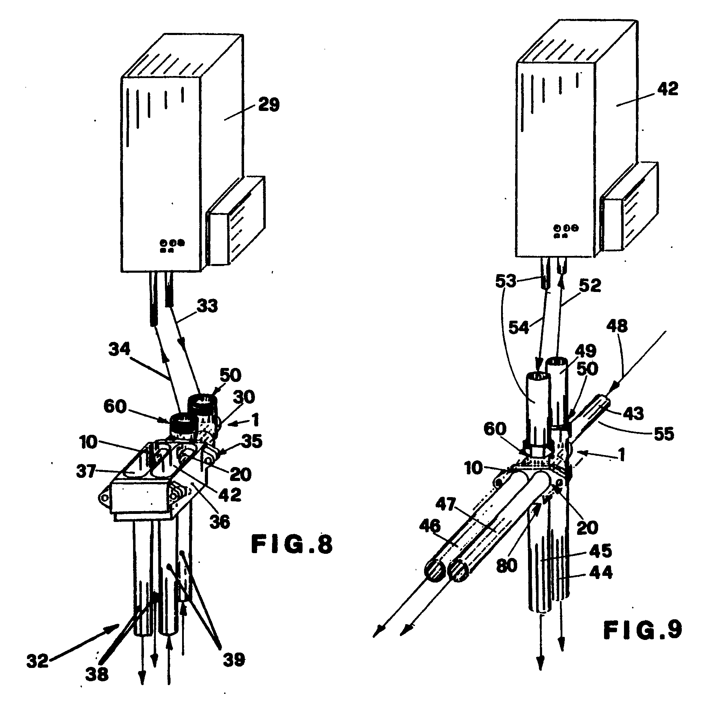

Yet another application of fitting 1 according to the invention is illustrated in Fig. 8, wherein it can be observed that the fitting is used to connect a boiler 29 with the shunt pipes 32 of a heating system. In this application it can be observed that way 50 receives the water flowing from the boiler in the direction of arrow 33, while way 60 leads the flow returning to boiler 29 in the direction of arrow 34. Through the flange set 35 header 36 is connected with the ways 10 and 20. The purpose of header 36 is to allow the connection of a plurality of pipes 32 with the ways 10 and 20 through which occurs the delivery and return flow from and to boiler 29. By observing the situation represented in Fig. 8 it will be noticed that the delivery flow 33 from the boiler, through way 50, duct 51, duct 11 and way 10 feeds chamber 37 of the header, from where it goes to feed the pipes 38 feeding the heating system. The return flow occurs through the pipes 39, which lead to chamber 42 of header 36 and from where through way 20, duct 21, duct 61 and way 60 the return flow reaches the boiler in the direction of arrow 34.

The application illustrated in Fig. 8 also yields the advantage of a connection obtained by using only two elements, i.e. the fitting, according to the invention and a header 36 of the known type, which, when it is connected with two of the ways of the fitting allows an easy connection between the boiler 29 and any number of delivery and return pipes 32 to and from the radiators. The ways 70 and 80, not represented in Fig. 8, as has already been said, are plugged and they can be used, if necessary, to make a further connection not foreseen in the original heating system with one more heating body which it may become necessary to install later. In fact, should it become necessary to add more than one radiator, it would be possible to join another header of the type represented in Fig. 8 with No. 36 to the ways 70 and 80, and it would allow the connection of a plurality of shunts, without any need for intervening on the previously performed junctions. Another application of fitting 1 is illustrated in Fig. 9, wherein it can be observed that fitting 1 of the invention is used for the connection of a heater 42 for the production of hot water with the water network 43 delivering cold water and with a series of hot-water distributing utilities represented by the pipes 44, 45, 46 and 47.

By observing the Figs. 9, 2 and 3 it can be seen that in a system of this type fitting 1 of the invention works with all its ways open. Through pipe 43 the cold water taken in from the water-network flows in following the direction of arrow 48 and flows through duct 11 and duct 51, as can specifically be observed in the Figs. 2 and 3 and is delivered to the ways 10, 50, 70, of which only the ways 10 and 50 are represented in Fig. 9. Thus the cold water flowing into pipe 43 in direction 48 flows through pipe 49 and is delivered into the water-heater 42 into which it flows following direction 52, while through the pipes 44 and 46 it is delivered to the utility distribution points. Through pipe 53 of heater 42 for the production of hot water, hot water flows in direction 54 and enters fitting 1 through way 60, duct 61 and then exits through duct 21, way 20 and way 80 so that hot water is then delivered to the pipes 45 and 47 which are connected with said ways and which will lead the hot water to the utility points. It is interesting to observe that in this case, too, it is possible to connect a header of the type indicated with 36 in Fig. 8 with the ways 10 and 20 or the ways 70 and 80, so that it is possible to supply a plurality of utility distribution points. It is also interesting to observe how in this type of application, too, all the purposes proposed by the invention have been fulfilled, i.e. an easy-to-assemble enbloc pipe fitting, replacing a plurality of fittings of the known type which would be necessary to obtain the same type of installation to the advantage of speed and, therefore, of decreased costs in the laying operation.

On the basis of what has been described it is easy to understand how the fitting according to the invention has fulfilled all the proposed purposes and yielded all the advantages. It has been seen that the fitting according to the invention permits the reduction of the number of components which are necessary for the connection with the mains of a waterworks system. It has been seen, in fact, how this purpose has been fulfilled by using the fitting according to the invention to connect the radiators with the delivery and return risers, to connect the heating system with an independent boiler and also to connect the hot and cold water pipe with an independent water heater, which is fed with cold water from the waterworks pipe through the same fitting. It has also been described how the purpose of decreasing the assembly time has been fulfilled both with regards to the decreased number of components to be handled and to the intrinsic ease with which the fitting is assembled.

Moreover, it has been described how, thanks to the fitting according to the invention, it is possible to perform the assembly operation more easily, even under difficult conditions, such as, for instance, the junction between the faucets of a sink and the water intakes on a wall when the space available between the column supporting the sink and the lateral wall is limited.

Finally, it has been seen how the fitting according to the invention can be considered universal from the point of view of its installation, since its junction ends may present a flange, a male or female thread or may be smooth and suited to be welded, so that the fitting according to the invention can be installed in any system regardless of the type of pipes it consists of and of the type of junction ends said pipes present.

During the manufacturing stage the fitting according to the invention may undergo variations and modifications with the view of improving its versatility concerning its applications. For instance the junction ends of each way of the fitting can be provided with a flange, a male or female thread or may be smooth and suited for welding in any combination thereof. Moreover in certain cases and for certain special applications some of the ways may be closed. These variations and modifications do, however, not exceed the scope of the claimed patent protection.

## Claims

1) An enbloc pipe fitting for waterworks pipes comprising a metal body (2), characterized in that it presents seven ways for the flow, of which three ways (10, 20, 30) are arranged along the longitudinal axis (3) of the fitting (1), two of them (10, 30) being in communication with each other, while the remaining four ways (50, 60, 70, 80) are arranged orthogonally and at the opposite sides in relation to the longitudinal axis (3) of the fitting (1), they are axially opposed to each other two by two so as to form two pairs (4; 5), wherein the ways (60, 80; 50, 70) of each pair (4; 5) communicate with each other, further characterized in that the ways (50, 70) of one (5) of said pairs communicate with the ways (10, 30) communicating with each other and being arranged orthogonally and along the longitudinal axis (3) of the fitting, while the ways (60, 80) of the other pair (4) communicate with the remaining way (20) arranged orthogonally and along the longitudinal axis (3) of the fitting; the ways of the fitting presenting junction ends (62, 64, 65, 67) suited to join the fitting with the pipes.

2) An enbloc pipe-fitting according to claim 1, characterized in that the end for the junction between the fitting and the pipes consists of a flange (62) provided with holes (63) for the lodging of the tightening screws.

3) An enbloc pipe-fitting according to claim 1, characterized in that at least one of the junction ends (64, 65, 69) obtained in correspondence with each way of the fitting is a male thread (68).

4) An enbloc pipe-fitting according to claim 1, characterized in that at least one of the junction ends (64, 65, 69) obtained in correspondence with each way of the fitting is a female thread (66).

5) An enbloc pipe-fitting according to claim 1, characterized in that at least one of the junction ends (64, 65, 69) obtained in correspondance with each way of the fitting is a smooth, gauged hole (67).

FIG.1

FIG.2

FIG.3

FIG.4

FIG.7

FIG.5

FIG 6

FIG.9

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3583004 (WATTS)<br>* column 2, line 11 - column 3, line 34; figures 3-6 *<br>--- | 1 | E03C1/02 |
| A | DE-A-2411570 (AKTIEBOLAGET GUSTAVSBERGS FABRIKER)<br>* pages 3 - 5; figures 1, 2 *<br>--- | 1 | |
| A | DE-C-646273 (BUTZKE)<br>--- | | |
| A | DE-A-3336807 (PLOTTEK)<br>----- | | |

**TECHNICAL FIELDS SEARCHED (Int. Cl.5 )**

E03C
F16L

The present search report has been drawn up for all claims

| Place of search | Date of completion of the search | Examiner |
|---|---|---|
| THE HAGUE | 12 JULY 1990 | BIRD C.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)